Europäisches Patentamt

European Patent Office

Office européen des brevets

(11) Numéro de publication: **0 026 198 B1**

# (12) FASCICULE DE BREVET EUROPEEN

(45) Date de publication du fascicule du brevet:
19.03.86

(21) Numéro de dépôt: 80900679.4

(22) Date de dépôt: **14.04.80**

(86) Numéro de dépôt international:
**PCT/FR 80/00058**

(87) Numéro de publication internationale:
**WO 80/02179** (16.10.80 Gazette 80/23)

(51) Int. Cl.⁴: **F 02 M 23/08,** G 01 L 23/24,
F 02 M 7/12, F 02 M 3/04,
B 60 T 17/04

(54) **DISPOSITIF CORRECTEUR DE CARBURATION DES MOTEURS DE VEHICULES EN PHASES DE FONCTIONNEMENT TRANSITOIRES.**

(30) Priorité: 12.04.79 FR 7909259

(43) Date de publication de la demande:
08.04.81 Bulletin 81/14

(45) Mention de la délivrance du brevet:
19.03.86 Bulletin 86/12

(84) Etats contractants désignés:
**CH DE FR GB LI NL SE**

(56) Documents cités:
**FR - A - 427 114**
**FR - A - 483 481**
**FR - A - 553 161**
**FR - A - 698 512**
**FR - A - 1 478 467**
**FR - A - 1 525 059**
**FR - A - 2 285 519**
**FR - A - 2 350 467**
**FR - A - 2 376 948**
**FR - A - 2 385 028**
**GB - A - 305 338**
**GB - A - 519 242**
**US - A - 1 389 909**
**US - A - 1 858 835**
**US - A - 3 470 855**
**US - A - 3 937 202**
**US - A - 4 166 382**

(73) Titulaire: **MANDAR, André, 23, avenue Georges Duhamel, F-94000 Créteil (FR)**
Titulaire: **MANDAR, Martine, 22, rue Jacques Lemercier, F-78000 Versailles (FR)**

(72) Inventeur: **MANDAR, André, 23, avenue Georges Duhamel, F-94000 Créteil (FR)**
Inventeur: **MANDAR, Martine, 22, rue Jacques Lemercier, F-78000 Versailles (FR)**

LIBER, STOCKHOLM 1986

## Description

La présente invention concerne un dispositif correcteur de carburation des moteurs de véhicules agissant par réduction ou suppression du débit d'essence ou/et par admission d'air additionel en aval du papillon des gaz du carburateur, par admission de gaz d'échappement, de gaz de carter, ou d'un mélange de ces gaz, durant les phases de fonctionnement transitoires du moteur: accélérations, décélérations, et changements des rapports de transmission du véhicule.

Associé à des accessoires particuliers, li peut être utilisé en tant que dispositif antipollution et économiseur du carburant destiné aux véhicules en service, mais le dispositif est facilement adaptable en première monte sur tout véhicule noveau et il peut être aussi utilisé pour améliorer le fonctionnement en phases transitoires des carburateurs modernes, ou des systèmes de carburation éléctronique.

Les dispositifs de ce genre, qui existens actuellement pour réduire la consommation et la pollution des moteurs, ne tiennent pas entièrement compte des corrections importantes à effectuer sur les carburateurs modernes durant les phases de fonctionnement transistoires des moteurs où la consommation instantanée devient importante en décélérations, mais surtout en accélérations; ces phases transitoires se manifestent durant 60% environ du temps de roulage des véhicules en milieu urbain, ce qui permet qu dispositif d'agir utilement durant 75à 80% de ce temps de roulage et de réduire d'une manière substentielle la consommation des véhicules actuels les mieux étudiés au plan des économies d'énergie et de la dépollution des moteurs.

Pour assurer les corrections de carburation, en décélération et en accélération, le dispositif selon l'invention utilise un système de commande pneumatique actionné par la dépression qui règne dans la tubulure d'admission du moteur. Ce système de commande est constitué de deux chambres étanches, séparées par un diaphragme, et qui communiquent entre elles par un étranglement retardateur. La dépression qui règne dans le collecteur d'admission du moteur communique directement et immédiatement dans la première chambre du système, mais avec un certain retard dans la deuxième chambre. Dans ces conditions, à chaque variation de la dépression, le diaphragme est soumis à une pression différentielle dont l'effort résultant pousse le diaphragme dans un sens durant les accélérations imposées au moteur (cas d'une diminution de la dépression) ou dans l'autre sens durant les décélérations (cas d'une augmentation de la dépression). Tous les carburateurs et dispositif de carburation connus, diffèrent nettement de la présente invention. Les systèmes de commande intégrés dans les carburateurs, connus depuis 1932, sont en général actionnés par la dépressionprise en amont du papillon des gaz et agissent directement sur le débit d'essence du gicleur principal pour enrichir le mélange carburé en accélérations et pour l'appauvrir en décélérations grâce au deplacement d'une seule aiguille corrective liée au diaphragme de commande. Cette aiguille vient modifier la section de passage de gicleur principal du carburateur, où bien la section de passage du gicleur d'air de l'émulsion du gicleur principal. Parmi les systèmes de commande intégrés aux carburateurs certains n'assurent que la fonction "Reprises du carburateur" et dans ce cas le diaphragme de commande actionne en accélérations un piston d'injection de carburant, ou assure l'ouverture d'un gicleur de débit supplémentaire de carburant. Les dispositifs de carburation non intégrés dans un carburateur agissent uniquement par admission d'air additionnel dans le collecteur d'admission du moteur pour éviter l'enrichissement du mélange carburé uniquement durant les décélérations.Pour ce faire, le diaphragme système de commande ouvre directement, ou par interposition d'un système pneumatique, un seul clapet permettant à l'air ambiant d'être aspiré dans la tubulure d'admission durant les décélérations. Le clapet se ferme à la fin de chaque décélération et cette fermeture est rapide si la décélération est immédiatement suivie d'une accélération; il reste fermé en dehors de tout fonctionnemenr en décélération.

Le dispositif du Brevet FR-A-1 478 467 dispose aussi d'un système de commande à chambres séparées par un diaphragme mais il n'agit que durant les accélération par enrichissement du mélange, obtenu par réduction ou suppression d'un débit d'air additionnel qui est établi en permanence dans le collecteur d'admission du moteur. Le système de commande utilisé présente la particularité d'être même principe que les systèmes à un seul diaphragme. Les deux diaphragmes du système sont réunis par une tige de commande qui comporte un clapet permettant l'ouverture ou la fermeture d'un orifice de debit d'air additionnel dans le collecteur d'admission. Au cours des ralentis à vide du moteur, des vitesses stabilisées et des décélérations, le clapet d'admission d'air est en position de pleine ouverture.Durant les accélérations le clapet se ferme plus ou moins selon le taux d'accélération imposé, et revient ensuite en position normale de pleine ouverture. Le retour en ouverture du clapet est évidemment plus rapide si l'accélération est suivie immédiatement d'une décélération.

Le dispositif Enrichisseur du Brevet FR-A-1 478467 nécessite un carburateur spécialement conçu pour le recevoir, en raison du débit d'air permanent qu'il impose au moteur les ralentis à vide et les vitesses stabilisées, afin de pouvoir, ensuite, procédér à l'enrichissement du mélange en accélération (ici il s'agit de la fonction Reprises) par arrêt du débit d'air (fermeture du clapet).

Pour ce dispositif, la tige reliant les deux diaphragmes n'agit, par rapport à sa position neutre, que dans le sens accélérations (fermeture du clapet) et n'adopte le sens décélérations que pour un retour à la positon neutre (clapet ouvert).

La seconde partie du dispositif du Brevet concerné, partie Economiseur, ne présente à l'analyse aucune similitude avec la présente invention. En effet, ce dispositif Economiseur assure une réduction de la richesse du mélange carburé par une admission d'air additionnel permanente aux charges partielles du moteur alors que la présente invention propose des Economiseurs agissant par admission d'air en accélération, et en décélération, qui cesse dès qu'un nouveau régime stabilisé du moteur est atteint; ce mode d'action temporisé étant le seul acceptable sur les carburateurs et les véhicules modernes à carburation particulièrement affinée . . .

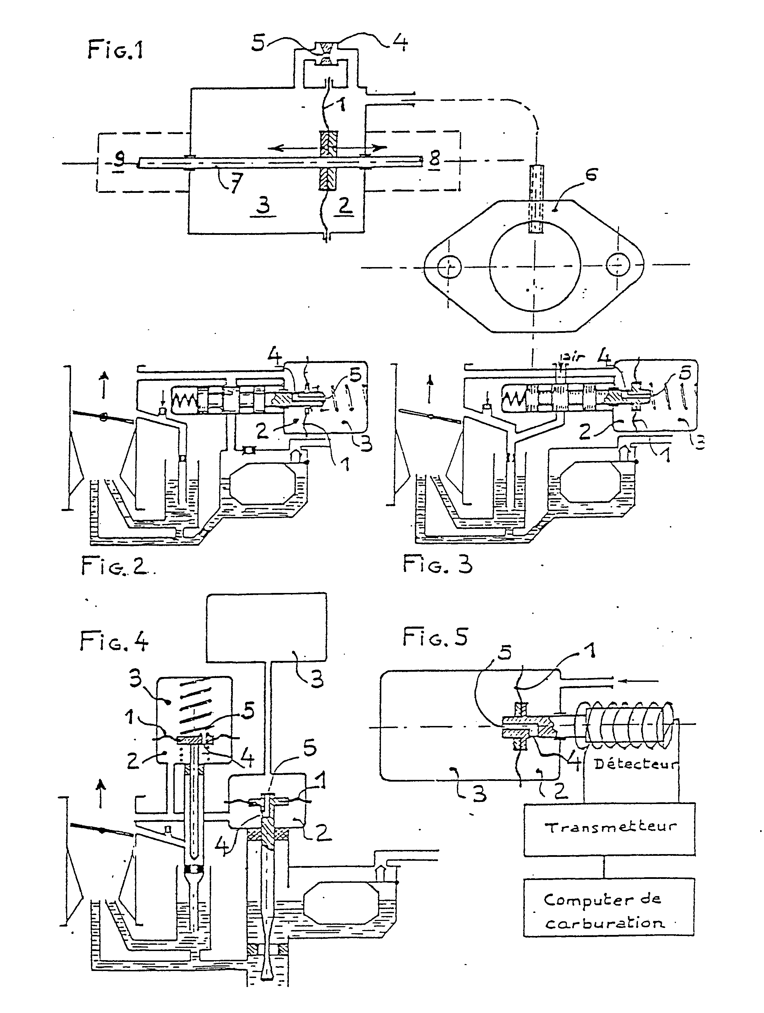

Le dispositif de base selon l'invention est réprésenté chematiquement par la figure 1.

Il comporte un diaphragme de commande de commande 1 séparant deux chambres.La première chambre 2 est directement reliée à la d'admission du moteur prise au niveau du collecteur d'admission 6.La deuxieme chambre 3, dénomée chambre de temporisation, de volume important, est reliée à la chambre 2 par un circuit d'intercommunication 4 comportant un système retardateur de transmission de la pression entre les chambres 2 et 3 notamment gicleur capillaire ou bougie de porcelaine poreuse 5.

Le diaphragme 1 peut actionner, par l'intermédiaire de la tige de commande 7 un organe de correction du côté de la chambre 2, repère 8 (corrections en décélérations) et un second organe de correction du côté de la chambre 3, repère 9. (corrections en accélérations).

Les deux organes de correction de carburation 8 et 9, peuvent être chacun, suivant le type de dispositif que l'on désire réaliser, constitués par au moins:

-Un clapet progressif d'admission d'air, ou de gaz additionel, dont l'entrée de ce clapet est relié à cet air ou ce gaz, et la sortie au collecteur d'admission au moyen d'une tuyauterie; le clapet est rappelé sur son siège en position fermeture par un ressort ou par un aimant.

Fig.6, Planche 2.

-Un clapet permettant la mise en communication de la dépression régnant dans le collecteur d'admission du moteur à la cuve à niveau constant du carburateur de manière à réduire plus ou moins le débit d'essence des gicleurs au cours des décélérations et des accélérations du moteur; la cuve à niveau constant est alors reliée à la pression atmosphérique par un gicleur dont la calibration est bien adaptée à la loi de débit du clapet. Un exemple de constitution schématique de ce mode d'action est donné par la Fig.2, Planche 1. (clapet remplacé ici par un tiroir de distribution).

Un clapet d'admission d'air permettant la mise en communication de la pression atmosphérique avec le canal du système de ralenti du carburteur, afin d'opérer une coupure partielle ou totale du débit du gicleur de ralenti durant les décélérations et éventuellement les accélérations du moteur; l'arrivée de l'air atmosphérique dans le canal de ralenti du carburateur s'effectue par une prise, au niveau de ce canal, au niveau du gicleur, ou de la vis-pointeau de réglage de richesse du ralenti. Un exemple de constitution schématique de ce mode d'action est donné par la Fig. 3, planche 1. (clapet remplacé ici par un tiroir de distribution).

Un élément de transmission pour agir directement sur la position d'une aiguille corrective placée dans un ou plusieurs gicleurs du carburateur (gicleur de ralenti, gicleur de marche ou gicleur du système de réprise) afin de corriger le débit du ou des gicleurs ou des gicleurs considérés, durant les décélération et les accélétrations. Un exemple de ce mode d'action est donné par la Fig. 4, planche 1.

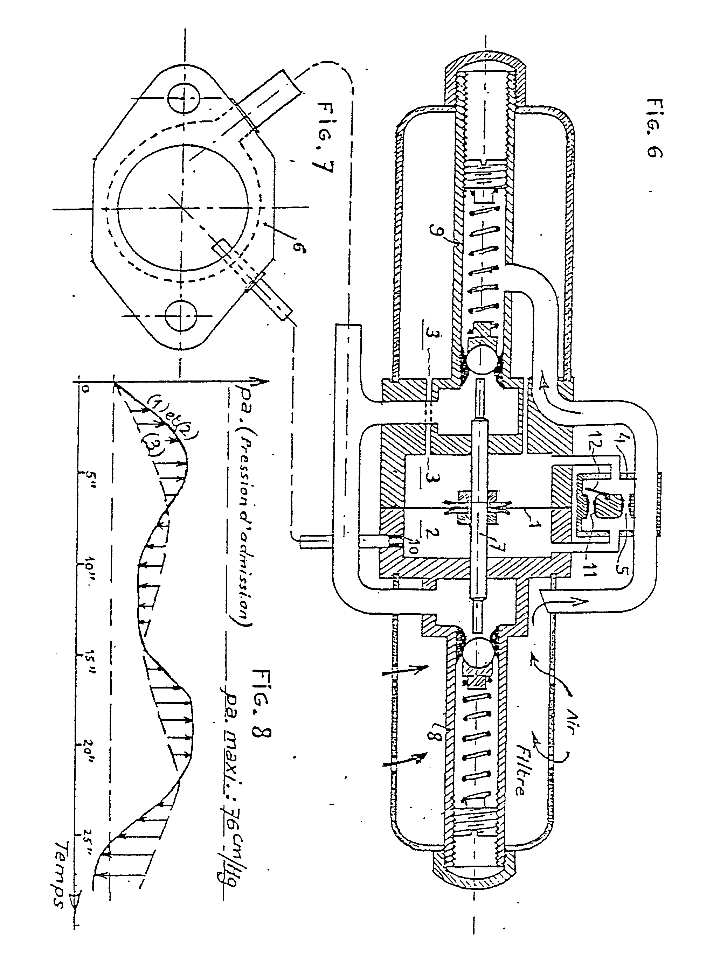

-Un élément de transmission électrique à distance pour donner un signal d'entrée en phase transitoire du moteur à un système quelconque de carburation.conventionnel ou électronique, que l'on souhaite rendre plus performant ou plus fiable, durant les accélérations et décélérations et éventuellement pour assurer les maintiens précis en régime stabilisé du moteur, ce qui permet de réduire également la consommation par suppression du phénomène de pompage de vitesse du véhicule. L'élément de transmission électrique à distance constituant l'organe de commande dispositif selon l'invention peut-être suivant le cas: un simple contacteur électrique pour les corrections "en tout ou rien", ou, pour les corrections de carburation suivant des lois de progressivité d'action, un potentiomètre, un transmetteur à reluctance variable, un transmetteur Selsyn, Desyn, etc...Un exemple de constitution est donné par la Fig. 5, planche 1.

L'importance de chaque correction effectuée, ou du signal transmis, par l'organe de correction du dispositif, selon l'invention, est fonction de l'effort transmis par le diaphragme et cet effort ainsi que durée d'action, sont directement fonction de l'importance des accélérations ou décélérations subies par le moteur et le véhicule, on a:

Effort transmis par la membrane = $f\left(\dfrac{dpa}{dt} \cdot K.S.\right)$ où -dpa est amplitude de la variation de pression d'admission lors de l'accélération ou/de la décélération,

-dt est la durée du developpement de l'amplitude dpa

-K est le coefficient de temporisation du dispositif qui dépend tout spécialement du volume de la chambre 3 et de la section de passage du gicleur 5.

-S est la surface utile de la membrane.

La figure 8, planche 2, donne, à titre d'exemple, une courbe de variation de la pression d'admission du moteur en fonction du temps, courbe 1, qui est aussi celle existant pratiquement dans la chambre 2, (courbe 2 confondue avec la courbe 1).

Les variations de cette pression courbes 1 et 2 engendrent des variations correspondantes de pression dans la chambre 3 décalées dans le temps suivant la valeur du coefficient, K. Ces deux courbes mettent en évidence les différences de pression qui existent dans le temps entre leschambres 2 et 3 et qui engendrent les efforts résultants dans un sens ou dans l'autre sur l'organe de correction du dispositif.

Le dispositif est donc bien en mesurs d'accomplir des actions de corrections de la carburation en phases transitoires proportionnelles à l'importance des accélérations et décélérations du moteur et du véhicule considéré, et par là même de permettre, éventuellement, la commandedu maintien en régime stabilisé du moteur.

Le dispositif selon l'invention présente l'aptitude de pouvoir être réglé sur un cycle normalisé réprésentatif de la circulation urbaine ou suburbaine pour le pays ou le Continent considere. Par exemple, le cycle ECE 15 pour l'Europe, le cycle Fédéral pour les U.S,A., etc...

En effet, ces cycles donnent les vitesses réalisées en moyenne par les automobilistes en fonction du temps en roulage urbain ou suburbain pour les faibles rapports de boite de vitesse utilisés dans ce cas, où les corrections de carburation sont les plus nécessaires

Or, ces cycles peuvent être aisément traduits en pression d'admission par rapport au temps et l'on aperçoit alors que les noveaux cycles obtenus sont presque identiques pour les véhicules de cylindrée voisine. C'est ainsi que ces cycles sont semblables pour des véhicules différents de cylindrées camprises entre 1000 et 1500 cm3.

Le dispositif objet de l'invention peut donc être temporisé pour une famille importante de véhicules déterminés de manière à optimiser les actions de corrections de carburation nécessaires pour le cycle le plus représentatif de la circulation moyenne urbaine ou suburbaine - cycle ECE 15 par exemple pour l'Europe

La représentation complète du cyckle ECE 15 en pression d'admissionen fonction de temps, et sa représentation en consommation instantanée résultant de simulationssur ordinateur, permettent de mettre en évidence que la temporisation à obtenir pour une utilisation optimale du dispositif, selon l'invention, est très légèrement différente pour les accélérations et les décélérations.

Pour le cycle urbain ECE 15, cette temporisation est d'environ:

-6 à 7 secondes pour les décélérations, et 4 à 5 secondes pour des accél rations.

Cette exigence est réalisée par un circuit double d'intercommunication entre les chambres 2 et 3 du dispositif comportant alors 2 gicleurs capillaires dont l'un d'eux est muni d'un petit clapet anti-retour de très faible inerte, pouvant être constitué par une membrane souple s'appliquant sur l'une des deux faces du gicleur. En accélération, la communication entres les chambres 2 et 3 est établie par les deux gicleurs alors qu'en décélération, cette communication ne s'effectue que par le gicleur non muni du clapet anti-retour.

Dans ce qui suit, l'invention est exposée plus en détail à l'aide de dessins représentant les modes d'éxécution les plus significatifs et les plus simples.

La figure 6, Planche 2, représente un correcteur de carburation selon l'invention agissant par admission d'air additionel, ou de gaz durant les accélérations et décélérations. La chambre 2 du système de commande est reliée dans ce cas à une bride à turbulence simple Fig.7 interposée entre le carburateur et le collecteur d'admission du moteur au moyen d'une petite tuyaterie souple. Le gicleur 10 permet d'amortir les fluctuations de la pression d'admission transmise à la chambre 2 notamment durant les bas régimes du moteur. Le système d'intercommunication 4 entre la chambre 2 et la chambre 3 est double et comprend le gicleur capillaire 5 et le gicleur capillaire 11 muni d'un clapet anti-retour 12 de manière à donner une temporisation plus élevée en décélération qu'en accélération.

Les organes de correction de carburation 8, pour les décelérations, et 9 pour les accélérations, sont chacun constitués par un clapet à bille fermé par un ressort tare.

Dans le cas représenté, c'est l'air qui assure la correction de carburation par appauvrissement du mélange air-essence (dilution du mélange air-essence et chute de dépression dans la collecteur d'admission qui réduit le débit d'essence des gicleurs).

Durant les accélérations du moteur, l'augmentation de la pression d'admission fait déplacer le diaphragme du côté de la chambre 3 et le clapet de l'organe 9, s'ouvre pour laisser le passage de l'air filtré vers la bride à turbulence 6.

Durant les décélérations, la diminution de la pression d'admission fait déplacer le diaphragme du côte de la chambre 2. Le clapet de l'organe de correction 8 s'ouvre pour laisser passer l'air additionel de correction du mélange air-essence.

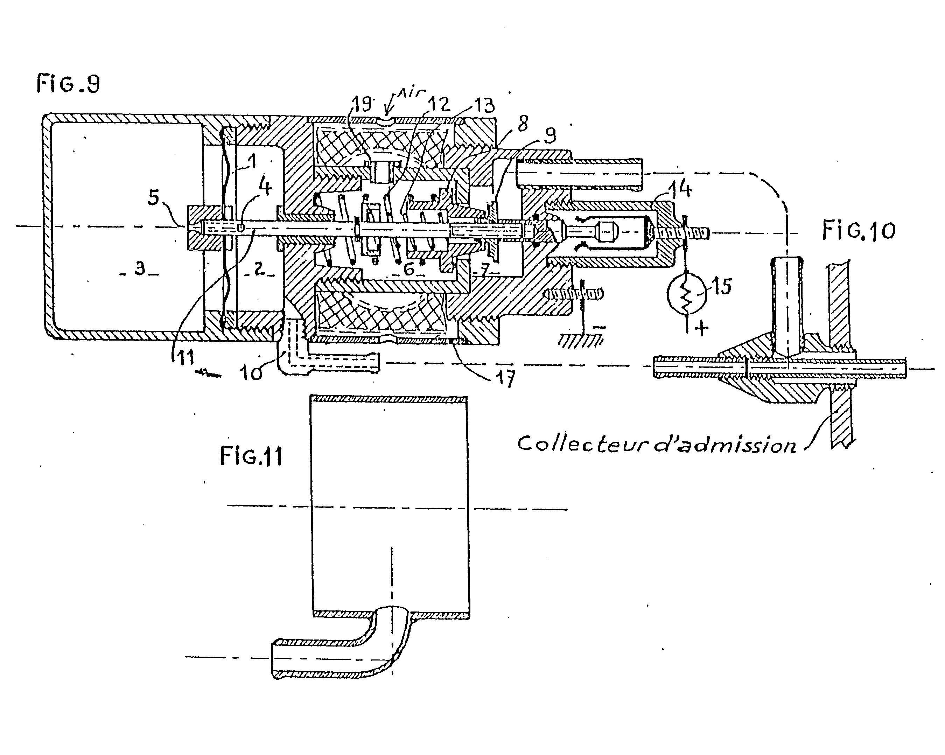

Une deuxième version du dispositif agissant par admission d'air ou de gaz est représente par la figure 9, planche 3. Dans cette version, un seul organe de correction à deux clapets est disposé du côte de la chambre 2 du système de commande et le circuit d'intercommunication ou retardateur entre la chambre 2 et la chambre 3 est constitué à travers la tige de commande la et ne comporte qu'un seul gicleur capillaire 5, mais ce circuit peut-être egalement doublé comme précédemment. Le diaphragme de commande 1 est constitué par une membrane de matière élastique, moulée ou à d'eveloppement.

En phase décélération, le diaphragme se déplace vers la chambre 2, la tige de commande 11 entrain le clapet 9 qui lui est solidaire en comprimant le petit ressort de rappel 13. Le clapet 9 étant ouvert laisse passer l'air de correction, de la chambre 6 à la chambre 7, laquelle communique avec le collecteur d'admission du moteur par la prise spéciale, figure 10 installée sur le collecteur et qui, dans ce cas, remplace la bride à turbulence.

En accélération, le diaphragme se déplace vers la chambre 3 et entraine la tige de commande 11 et le clapet 9 qui, restant appliqué sur son siège, pousse et ouvre le clapet 8 d'accélération en comprimant le ressort 12.

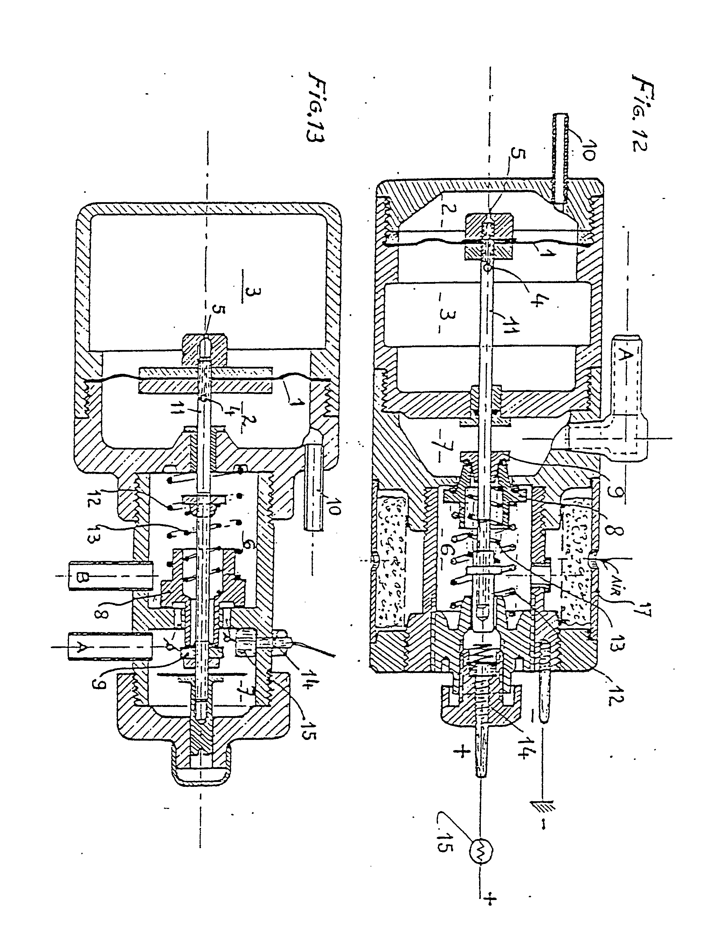

Pour l'admission éventuelle de gaz, autres que l'air, la pièce 17 de la chambre de filtrage de l'air et le filtre sont remplacés par la pièce représentée par la figure 11 dont raccord est relié à un circuit de réaspiration des gaz de carter ou de gaz d'echappement.

Le gicleur 19 limite, suivant le modèle de véhicule, le débit d'air ou de gaz de correction de carburation.

Dans cette deuxième version du dispositif, représentée par la Fig.9, un système contacteur électrique 14, commandé par le déplacement de la tige commande des clapets est mis en place. Ce système contacteur réalise la mise à la masse dùn circuit comportant un voyant 15, placé au tableau de bord du véhicule, lorsque le dispositif entre en fonctionnement à partir d'un certain seuil de valeur d'accélération ou de décélération. Ce voyant est destiné à jouer le rô1e d'indicateur de fonctionnement du dispositif et surtout d'indicateur pour l'aide à la conduite économique des véhicules.

Pour cette fonction particulière de signalisation, l'un des voyants électriques d'alarme existants déjà sur le véhicule peut-être utilisé (par exemple, voyant d'alarme frein à main).Dans ce cas, le contact 14 ferme le circuit entre le contacteur d'alarme choisi et la massa ce qui rend l'installation du circuit de signalisation dux dispositif simple et immédiate sans compromettre la fonction d'origine du circuit d'alarme intéressé.

La figure 12, planche 4, représente une troisième version du dispositif dont les divers éléments constitutifs sont semblables à ceux61 de la version précédente (mêmes numéros de repérage des éléments).

L'organe de correction à deux clapets, identiques aux précédents, est placé du côte de la chambre 3 du système de commande et le système de signalisation, plus facilement réglable, ne contrôle que les accélérations importantes qu'il convient d'eviter pour une conduite economique.

Enfin, la figure 13, planche 4, donne une dernière version du dispositif agissant par admission d'air, de gaz de carter ou d'échappement dont la réalisation parait la plus fiable et la plus économique pour les véhicules en service. Elle se distingue des deuxième et troisième versions précédentes par la constitution des clapets qui ne comportent pas de joint d'étanchéité. De plus, le clapet d'accélération fonctionne en "tout ou rien" sans progressivité notable du débit en fonction de son déplacement d'ouverture. Il met en communication le débit d'air ou de gaz de la chambre 6 à la chambre 7 par les perçages périphériques dont la section et le nombre sont adaptés au type de véhicule sur lequel le dispositif est installé. Le système électrique de signalisation du voyant au tableau de bord pour la conduite économique, comprend un disque contacteur 15, dont la position neutre est reglable et deux plots de contacts fixes I4 (dont I seul est représenté sur la figure 13).Le boîtier formant les chambres 6 et 7 de l'organe de distribution d'air ou de gaz, est de préférence en matière plastique isolante. L'organe de distribution est raccordé au collecteur du moteur équipe d'une bride à turbulence, Figure 7, ou d'une prise spéciale, figure 10, au moyen de deux tuyateries souples, l'une de grosse section aboutissant au tube A (aspiration) et l'autre de petite section aboutissant à la chambre 2; le tube B sert à relier, au moyen d'une tuyaterie de grosse section, le circuit d'air filtre, ou de gaz, au dispositif.

Lorsque les décélérations persistent au-delà de 10 secondes dans les cas de pentes de roulage négatives, de descentes en montagne, il peut-être adjoint aux dispositifs représentés sur les figures 6, 9, 12 et 13, un système décélérations totale constitué:

-soit par un clapet de surdépression placé sur le circuit de distribution d'air additionel ou de gaz, simple ou à membrane de commande, mettant en communication l'air ou le gaz, avec la tubulure d'admission du moteur.

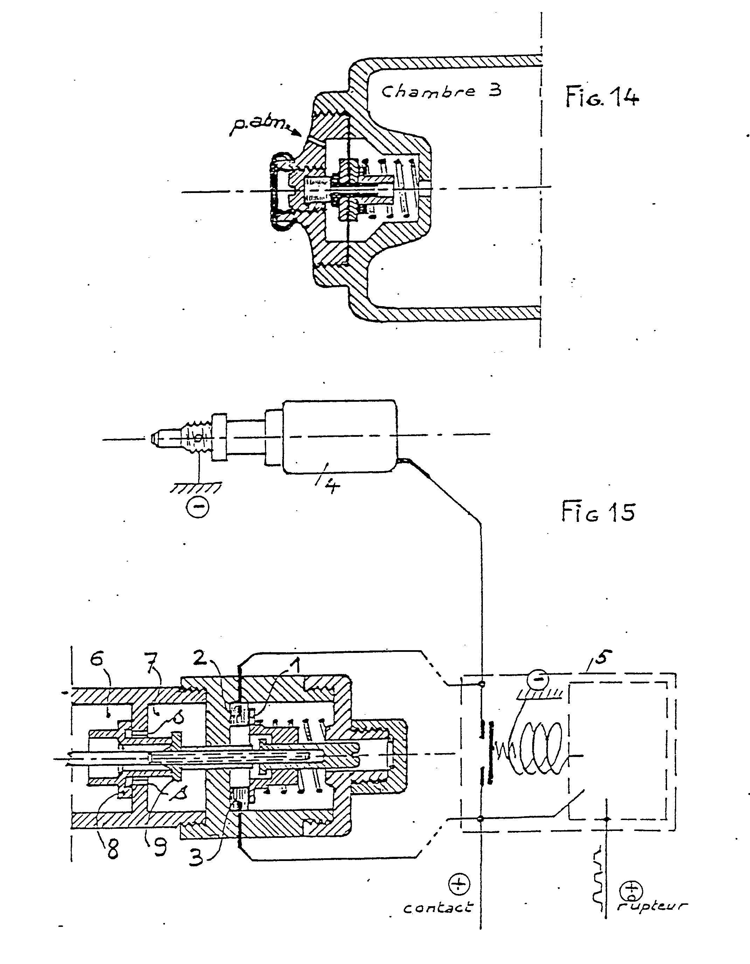

-soit par un clapet placé entre la chambre 3 de temporisation et la pression atmosphérique. Ce clapet, figure 14, planche 5, limite la valeur minimale de la pression atteinte dans cette chambre à celle voisine de la valeur de la pression d'admission du moteur lors du ralenti à vide.

Les dispositifs représentés par les Figures 6, 9, 12 et 13 peuvent être équipés d'un contacteur électrique réaliser, par voie électromagnétique, la coupure du débit du gicleur de ralenti du carburateur en décélérations (coupure de débit totale ou partielle).

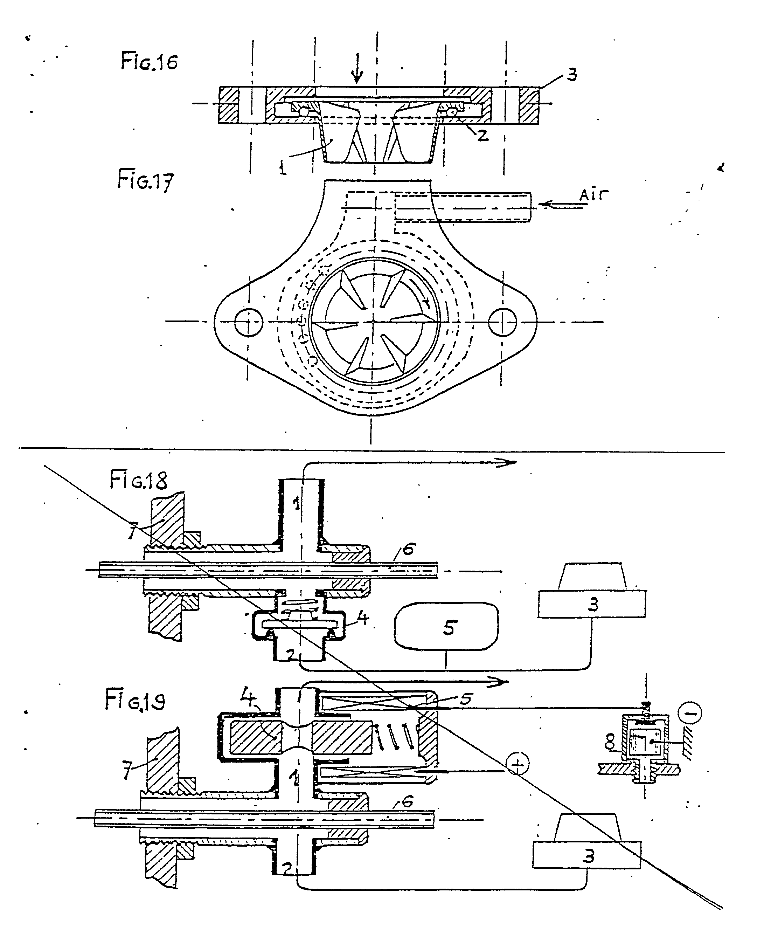

La Figure 15, planche 5, donne une représentation de l'exemple de contacteur électrique placé dans la chambre 7 du dispositif de la Figure 13. On identifie dans cette représentation, les chambres 6 et 7 de l'organe de distribution d'air, ou de gaz, déjà indiquées sur la Figure 13. Le disque contacteur réglable 1 assure, en position neutre, et en position accélération, la fermeture du circuit par les plots de contact fixes 2 et 3. (Le contacteur du circuit du voyant d'Aide à la conduite économique n'est pas ici représenté).

Lorsque le dispositif entre en phase décélération, le disque 1 est entrine par la tige de commande du dispositif et le circuit est ouvert. Dans cette condition, le gicleur de ralenti 4 installé sur le carburateur (gicleur de type étouffoir à solénoide et aiguille pointeau) n'est plus alimenté par la tension de bord du véhicule et se ferme: le débit d'essence est coupé.

Ce système de coupure en décélération du gicleur de ralenti est différent des systèmes existants par le fait que sa commande s'effectue en fonction de l'effort temporisé du système de commande du dispositif (Effort de temporisation = fonction

FIG1/10

K). Or, les autres dispositifs connus agissent soit lorsque la dépression de la tubulure d'admission atteint une valeur supérieure à celle du ralenti à vide, ce qui limite le fonctionnement aux seules décélérations totales (papillon des gaz fermé) soit par un moyen électronique d'effectuer une différentielle

FIG2/10

par exemple, n, étant la vitesse de rotation du moteur).

L'installation de la fonction "coupure du gicleur de ralenti en décélération" sur le Dispositif objet de l'invention nécessite la mise en place dans le circuit électrique de commande du gicleur d'un relai electro-magnetique ou électronique représenté par la figure 15 repère 5 permettant l'alimentation sous tension du gicleur lorsque le régime de rotation du moteur est compris entre 0 et 1200 tours/minutes par exemple.

Ce relai contacteur facilite en particulier le retour au régime de ralenti à vide du moteur à la suite d'une forte décélération suivi d'un freinage du véhicule, car, dans cette condition, le disque contacteur du dispositif n'a pas le temps de retrouver sa position de fermeture du circuit.

Le relai électro-magnetique ou électronique est inséré dans boîtier 5 avec les circuits électroniques connus d'élaboration du signal d'ouverture de ce relai, après 1200 Tours/Minute environ du moteur.

Le boîtier de relai peut comprendre notamment:
- 1 circuit de mise en forme des impulsions provenant du rupteur du système d'allumage du moteur
- 1 ensemble intégrateur donnant une tension proportionelle à la fréquence des impulsions
- 1 détecteur de tension de seuil avec potentiomètre de reglage
- le relai, ou circuit de commutation assurant l'alimentation sous tension du gicleur de ralenti pour des fréquences d'entrée comprises entre 0 et 40 Hertz/secondes (cas d'un moteur 4 cylindres - entre 0 et 1200 Tours/Minute).

Au-delà de 1200 tours par minute du moteur (seuil fixé) le relai est ouvert et le contacteur inséré dans le dispositif selon l'invention peut assurer seul la commande du débit du gicleur de ralenti: débit assuré en vitesse stabilisée du moteur et en accélération et débit coupé en décélération sur toutes les plages de fonctionnement du moteur.

Dans cette version mixte du dispositif, agissant par admission d'air additionnel ou de gaz, et par coupure du gicleur de ralenti, le débit d'air ou de gaz en décélérations peut-être fortement réduit. Ce qui supprime toute gêne pour le démarrage d'un moteur muni du dispositif et ce qui accroit notablement son efficacité en économie de carburant et en réduction des polluants (en particulier les HC).

Toutes les versions du dispositif selon l'invention, peuvent voir leur efficacité augmentée par l'emploi d'une bride à turbine de turbulence dont les figures 16 et 17 donnent une représentation schématique. Cette bride est placée entre le carburateur et le collecteur d'admission du moteur. Elle est caractérisée par le fait que la turbine 1 est centrée dans la bride par un roulement à billes et de préférence du type roulement butée 2, logé intégralement dans la bride 3. Par cette disposition, seule la turbine 1 se trouve dans le flux du mélange carburé fourni par le carburateur.

La turbine et la partie mobile du roulement à bille présentent une certaine inertie en rotation, suffisante pour amortir les fluctuations de vitesse de la veine gazeuse air-essence, afin de limiter le phénomène de double succion de l'essence au niveau du carburateur, et d'améliorer la répartition de mélange carburé dans les tubulures d'admission du moteur. La bride à turbine de turbulence 3 est également caractérisée par le fait que l'air additionnel ou le gaz, de correction de la carburation traverse cette bride et les espaces inter-billes du roulement pour refroidir ce dernier et éventuellement le graisser: cas de l'admission d'air et de gaz de carters. Pour cette turbine en soi la demande divisionnaire EP-A-0105533 a été déposée.

Les différentes versions du dispositif selon l'invention, peuvent être reliées au collecteur d'admission du moteur sans l'emploi de brides à turbulence, par un ou deux raccords normaux pouvant exister sur ce collecteur, ou des raccords spécialement installés pour l'emploi du dispositif.

Dans ce dernier cas, il peut être fait usage d'un raccord deux voies, selon l'invention, représenté par la figure 10.

Il est possible également d'utiliser un raccord 3 voies pour s'adapter en lieu et place du raccord de réaspiration des gaz de carter au niveau aval du carburateur qui est ordinairement installé sur le collecteur d'admission du moteur.

Dans ce cas, la voie I est reliée à l'organe de correction, la voie 2 sert à rétablir le montage d'origine de réaspiration des gaz de carter et la troisième voie constituée par le tube plongeur est reliée à la chambre 2 du dispositif.

Il est également passible d'installer sur le collecteur d'admission du moteur, deux ou plusieurs raccords distincts répartis symétriqument de part et d'autre de l'axe du carburateur de manière que l'air additionel ou le gaz admis dans le collecteur pusse être contrôlé par des gicleurs de débit installés sur les raccords afin de tenir compte des différences de richesse du mélange qui existent entre les cylindres du moteur.

Le relai contacteur 5, de la figure I5, planche 5, nécessaire à l'installation de la fonction "coupure du gicleur de ralenti en décélérations" du dispositif selon l'invention, peut, éventuellement, être remplace par un simple relai-contacteur dont la fermeture est assurée par la mise en tension du circuit indicateur de freinage du véhicule. De cette manière, le gicleur-étouffoir est alimentéen tension et débite normalement des que véhicule est ralenti par freinage et que le contacteur de freinage du véhicule es ferme.

Le dispositif selon l'invention peut-être également piloté par la pression statique ou dynamique, qui règne en amont du papillon des gaz du carburateur dans le cas où il s'agit d'apporter principalement les corrections prevues, au système de marche normale du carburateur ou aux vitesses élevées du véhicule.

**Revendications**

1-Dispositif correcteur de carburation pour moteurs soumis à de fréquentes modifications de vitesse de rotation et de charge, notamment moteurs de véhicules automobiles, dont le système de commande des corrections à effectuer comporte (Fig.1) une première chambre étanche (2) reliée directement â la pression d'admission qui règne dans le collecteur d'admission du moteur (6), et une deuxième chambre étanche (3) reliée à la première chambre par un étranglement retardateur (5) de transmission de la pression, de manière que les variations de la pression d'admission du moteur transmises, immédiatement dans la première chambre, ne se communiquent à la deuxième chambre qu'avec un certain retard; un diaphragme (1) sépare la première et la deuxième chambre et se trouve ainsi soumis àune pression différentielle dont l'effort résultant commande les corrections de carburation, caractérisé en ce que le dispositif agit pour réduire l'enrichissement du mélange carburé durant toutes les phases transitoires de fonctionnement du moteur (accélérations et décélérations) par réduction ou coupure du debit de carburant fourni par le système de carburation et/ ou par admission dans le collecteur d'admission du moteur, d'air additionnel, connu en soi, ou de gaz de carter, de gaz d'échappement, ou d'un mélange de ces divers gaz, et en ce que les déplacements du diaphragme, par rapport à sa position neutre, commandent, dans un sens, le ou les organes (8) assurant les corrections durant les périodes de décélerations du moteur, et, dans l'autre sens, le ou les organes (9) assurant les corrections en accélérations caractérisé également en ce que les déplacements du diapgragme assurent la commande des organes de correction de carburation par d'une maniere directe etmécanique etfou l'inerméiaire d''u detectéeur-tansmeittur éelctriquée,electroo-magnétiqueoou électronique. (Fig.5 et Fig.15, repères 1, 2 et 3.)

2 - Dispositif selon la revendication 1 destiné à agir par admission, en aval du carburateur, d'air additionnel ou de gaz d'échappement, de gaz de carter ou d'un mélange de ces gaz, caractérisé en ce que le diaphragme commande (Fig. 9 - 12 - 13) simultanément par l'intermédiaire d'une tige (11), dans un sens, l'ouverture d'un clapet (9) de distribution d'air ou de gaz additionnel durant les périodes de décélération, et, dans l'autre sens, l'ouverture d'un second clapet (8) de distribution d'air ou de gaz durant les périodes d'accélération.

3 - Dispositif selon la revendication 1, caractérisé en ce que le diaphragme commande un tiroir de distribution (fig. 3) mettant en communication le collecteur d'admission et une voie d'entrée d'air additionnel, ou de gaz d'échappement, ou de gaz de carter, durant les périodes d'accélérations et de décélérations.

4 - Dispositif selon la revendication 1 caractérisé en ce qu'il agit en accélérations et en décélérations par admission d'airdans le canal d'émulsion du ralenti d'un carburateur et par le fait qu'il assure la coupure du débit du gicleur de ralenti durant les décélérations (Fig.3).

5 - Dispositif selon la revendication 1 destiné à réduire le débit d'essence fourni par un carburateur par admission de la préssion d'admission du moteur dans la cuve à niveau constant du carburatéur, caractérise en ce que l'admission de cette pression dans la cuve est contrôlée par l'effort, ou le signal, transmis par le diaphragme de commande du dispositif sur un système de distribution progressive, à aiguille, à clapet ou à tiroir de distribution, de manière à réaliser une introduction progressive de la pression d'admission dans la cuve proportionnelle à l'importance des accélérations et décélérations du moteur, la cuve à niveau constant du carburateur ne communiquant avec la pression atmosphérique que par un gicleur d'air parfaitement calibré (Fig. 2).

6 - Dispositif selon la revendication 1, assurant au moins la coupure du débit du gicleur de ralenti d'un carburateur durant les décélérations par fermeture de ce gicleur du type "Gicléur-étouffoir électrique", connu, ou par fermeture du canal d'émulsion du circuit de ralenti du carburateur au moyen d'un électroclapet-étouffoir, également connu, caractérisé en ce que le système de commande du dispositif (fig.15) actionne un contacteur électrique (1) qui reste en position de fermeture durant les régimes stabilisés du moteur et les accélérations, de manière à assurer l'alimentation électrique de l'étouffoir (4) et le débit normal de gicleur de ralenti, et qui s'ouvre pour couper cette alimentation électrique, et le débit du gicleur, durant les décélérations.

7 - Dispositif selon la revendication 6, caractérisé en ce que l'alimentation électrique de l'étouffoir, permettant le débit normal du gicleur de ralenti, est assurée, en secours, par un système contacteur indépendant du dispositif (Fig.15, repère 5) pour éviter le calage possible du moteur à la suite d'une décélération importante suivie d'un freinage prolonge du véhicule, le contact étant asservi à la vitesse de rotation du moteur ou au freinage du véhicule, par le contact de signalisation électrique du freinage (4),

8- Dispositif selon la revendication 2, caractérisé par le fait que le système de distribution d'air additionnel ou de gaz au moteur comporte (Fig. 9, 12 et 13) un corps unique (6) à deux clapets (8 et 9), ou à un tiroir de distribution, disposé d'un seul côté du diaphragme de commande, dont le mouvement est transmis aux clapets, ou au tiroir de distribution, par une tige de commande creuse (11) comportant ledit étranglement retardateur (4 et 5) entre la première et la deuxième chambre (2 et 3) du système de commande.

9 - Dispositif selon la revendication 8 caractérisé en ce que le clapet d'accélérations (Fig. 9, 12 et 13, repère 8) a son siège surle fond de la chambre à clapets (6) et le clapet de décélérations (9), solidaide la tige de commande, a son siège centrè sur le clapet d'accélération (8) de manière que le déplacement de la tige (11) entraine, dans le sens décélération, l'ouverture du clapet de décélération (9) t dans le sens accélération, par l'intermédiaire de ce clapet (9) reposant sur son siège, l'ouverture du clapet (8).

10 - Dispositif selon l'une des revendications 1 à 10, caractérisé en ce que l'étranglement retardateur est à double voie (Fig.6) et en ce que la première voie (5) comporte un gicleur capillaire, ou bougie de porcelaine poreuse, qui permet une circulation retardée identique de la pression dans les deux sens, alors que la deuxième voie (11), pareillement constituée, comporte en plus, un petit clapet anti-retour (12) à faible inertie.

11 - Dispositif selon l'une quelconque des revendications 1, 3, et 6 à 10, utilisant une bride à turbine de turbulence et d'homogénéisation comportant en son centre un élément rotatif centré à l'intèrieur d'un roulement à billes encastré dans la bride; l'air additionnel ou le gaz fourni par le dispositif traversant cette bride et les espaces inter-billes du roulement pour corriger la carburation, caractérisé en ce que la bride de turbulence à roulement périphérique est placée entre le carburateur et le collecteur d'admission du moteur, et que l'élément rotatif est une turbine de type axial dont seules les ailettes se trouvent dans le flux du mélange carburé, la turbine et la partie mobile du roulement à bille (3), de préférence du type roulement de butée, présentant une inertie suffisante pour que la turbine amortisse les fluctuations de vitesse de la veine gazeuse air-essence, afin de limiter le phènoméne de double-succion de l'essence au niveau du carburateur et d'améliorer la répartition du mélange carburé dans les tubulures d'admission du moteur,et la turbine (fig. 16 et 17) étant constituée de plusieurs ailettes réparties et implantées autour de l'alésage interne du roulement à billes formant tuyère; les ailettes débordent au-delà de l'épaisseur du roulement à billes et de la bride en pénétrant dans le collecteur d'admission du moteur, elles convergent vers le centre du roulement à billes sans l'atteindre et leur indidence de calage par rapport au vecteur vitesse du mélange carburé est faible (20° environ à l'emplanture) (Fig. 16).

12 - Dispositif selon l'une quelconque des revendications 1 à 10 caractérisé en ce qu'il comporte un système électrique destiné à l'éclairage d'un voyant ou indicateur électrique quelconque, placé au tableau de bord du véhicule de manière que lorsque le dispositif entre en fonctionnement à partir d'un certain seuil de valeur d'accélération ou de décélération, le système électrique commande l'éclairage du voyantou de l'indicateur, pour constituer une indication de bon fonctionnement du dispositif et une aide à la contuite économique du véhicule.

## Patentansprüche

1 - Vergasungskorrekturvorrichtung für Motore, die häufige Drehzahl- und Belastungsänderungen erfahren, inbesondere Automobilmotore, und deren Steuersystem folgenden Aufbau hat (Fig.1): eine erste dichte Kammer (2) die direkt mit dem Ansaugdruck in Verbindung steht, das heißt, dem Druck, der im Ansaugkrümmer des Motors vorliegt (6), eine zweite dichte Kammer (3), die mit der ersten Kammer über eine Verzögerugsdrossel (5) in der Weise verbunden ist, daß die Anderungen des Motor-Ansaugdruckes, die sofort auf die erste Kammer übertragen werden, die zweite Kammer erst nach einer gewissen Verzögerung erreichen. Eine Nembran (1) trennt die erste von der zweiten Kammer und ist somit einem Differenzdruck unterworfen, dessen resultierende Kraft die Vergasungskorrekturen in der Weise steuert, indem die Vorrichtung die Anreicherung der Vergasermischung in allen Übergangsphasen der Motorfunktion (Beschleunigungen und Verzögerungen) verringert, durch Reduzierung oder Unterbrechung des vom Vergasersystem gelieferten Kraftstoffes und/oder durch Einlaß von Zusatzluft in den Ansaugkrümmer des Motors, bzw. von Gehäusegas, Auspuffgas, oder einer Mischung dieser Gase. Die Bewegungen der Membran aus ihrer Ruhelage heraus steuert in der einen Richtung das Organ oder die Organe (8), welche die Korrekturen während der Verzögerungsphasen des Notors bewirken, und in der anderen Richtung das oder die Organe (9) welche die Korrekturen bei den Beschleunigungen bewirken.

Die Vorrichtung ist außerdem dadurch charakterisiert, daß die Bewegungen der Nembran die Steuerung der Organe der Vergaserkorrektur in einer direkten, mechanischen Weise bewirken und/oder über einen elektrischen, elektronischen oder elektromagnetischen Geber/Meßübertrager (Fig. 5 und 15, Richtpunkte 1, 2, und 3).

2 - Vorrichtung gemäß Patentanspruch 1, die durch Einlaß von Zusatzluft oder Auspuffgas oder Gehäusegas oder einer Mischung dieser Gase in den Vergasereintritt in der Wejse wirkt, daß die Membran (Fig 9 - 12 - 13) über einen Stift (11) gleichzeitig in der einen Richtung die Offnung einer Klappe (9) zur Verteilung von Luft oder Zusatzgas in den Verzögerungsphasen bewirkt, und in der anderen Richtung die Of f nung einer zweiten Klappe (8) zur Verteilung von Luft oder Zusatzgas während der Beschleunigungsphasen.

3 - Vorrichtung gemäß Patentanspruch 1, charakterisiert durch die Membran die einen Verteilerschieber (Fig.3) betätigt, der den Eingangskrümmer mit einem Kanal für den Einlaß von Zusatzluft, oder Auspuffgas, oder Gehäusegas während der Beschleunigungs- und Verzögerungsphasen verbindet.

4 - Vorrichtung gemäß Papentanspruch 1, charakterisiert dadurch, daß sie bei Beschleunigungen oder Verzögerungen den Lufteintritt in den Leerlauf-Emulsionskanal eines Vergasers bewirkt und hierdurch die Unterbrechung des Durchsatzes der Leerlaufdüse während der Verzögerungen (Fig.3) verursacht.

5 - Vorrichtung gemäß Patentanspruch 1, bestimmt zur Reduzierung des von einem Vergaser bewirkten Benzindurchsatzes, durch Zuführung des Motor-Einlaßdruckes in die Kammer mit konstantem Niveau des Vergasers, dadurch charakterisiert, daß der Einlaß dieses Drucks in die Kammer durch die Kraft oder das Signal gesteuert wird, das durch die Steuermembran der Vorrichtung auf ein System der progressiven Verteilung mit Nadel, Klappe oder Verteilerschieber in der Weise übertragen wird, daß eine progressive Einführung des Einlaßdrucks in die Kammer proportional zu der Größe der Beschleunigungen oder Verzögerungen des Motors bewirkt wird, wobei die Vergaserkammer mit konstantem Niveau mit dem atmosphärischen Druck nur über eine präzis justierte Luftdüse (Fig.2) in Verbindung steht.

6 - Vorrichtung gemäß Patentanspruch 1, die zumindest die Unterbrechung des Durchsatzes der Leerlaufdüse eines Vergasers während der Verzögerungen durch Schließen dieser Düse nach der bekannten Art "Düse-elektrische Drossel" bewirkt, oder durch Schließen des Emulsionskanals des Vergaser-Leerlaufzweiges mit Hilfe einer gleichfalls bekannten elektrischen Drosselklappe, und die dadurch charakterisiert ist, daß das Steuersystem der Vorrichtung (Fig.15) einen elektrischen Kontakt (1) betätigt, der während der stabilisierten Arbeitsphasen des Motors und den Beschleunigungen in der Weise geschlossen bleibt, daß die Stromversorgung der Drosselklappe (4) und der Normaldurchsatz der Leerlaufdüse gewährleistet wird, und der sich öffnet, um die Stromversorgung und den Durchsatz der Düse während der Verzögerungen zu unterbrechen.

7 - Vorrichtung gemäß Patentanspruch 6, dadurch gekennzeichnet, daß die Stromversorgung der Drosselklappe, welche den Normaldurchsatz der Leerlaufdüse bewirkt, bei Notbetrieb durch ein von der Vorrichtung unabhängiges Kontaktsystem (Fig. 15, Richtpunkt 5) gewährleistet wird, um das mögliche Aussetzen des Motors nach einer bedeutenden Verzögerung, der eine längere Bremsung des Fahrzeuges folgt, zu vermeiden. Der Kontakt wird durch die Motordrehzahl, oder bei Fahrzeugbremsung durch den Bremslichtkontakt gesteuert.

8 - Vorrichtung gemäß Patentanspruch 2 dadurch gekennzeichnet, daß das Verteilersystem für Zusatzluft oder Motorgas (Fig. 9, 12 und 13) einen einzigen Körper (6) mit 2 Klappen (8 und 9) enthält, oder einen Verteilerschieber, der an einer einzigen Seite der Steuermembran angeordnet ist, dessen Bewegungen an die Klappe oder an den Verteilerschieber durch eine hohle Steuerstange (11) bewirkt wird, welche die genannte Verzögerungsdrossel (4 und 5) zwischen der ersten und zweiten Kammer (2 und 3) des Steuersystems enthält.

9 - Vorrichtung gemäß Anspruch 8 dadurch gekennzeichnet, daß die Beschleunigungsklappe (Fig.9, 12 und 13, Richtpunkt 8) und ihr Sitz auf dem Boden der Klappenkammer (6) und die Verzögerungsklappe (9), die fest mit dem Steuerstift verbunden ist und deren Sitz auf der Beschleunigungsklappe (8) zentriert ist wie folgt durch die Bewegungen des Stiftes 11 betätigt werden: in Verzögerungsrichtung erfolgt die Öffnung der Verzögerungsklappe (9) und in Beschleunigungsrichtung, über diese Klappe die auf ihrem Sitz ruht, die Öffnung der Beschleunigungsklappe (8).

10 - Vorrichtung gemäß einem der Patentansprüche 1 bis 9 dadurch gekennzeichnet, daß die Verzögerungsdrossel einen Doppelkanal besitzt (Fig.6), wobei der erste Kanal (5) eine Kapillardüse enthält, oder einen Stift aus porösem Porzellan, der eine verzögerte Zirkulation bewirkt, die identisch zum Druck in beiden Richtungen ist, während der zweite Kanal (11), der in gleicher Weise auf gebaut ist, außerdem eine kleine Rückschla8-klappe (12) mit geringer Trägheit enthält.

11 - Vorrichtung gemäß einem der Patentansprüche 1, 3, und 6 bis 10, die einen Flansch mit einer Turbine für Turbulenz und Homogenisierung verwendet, die in ihrem Zentrum ein sich drehendes Teil enthält, das im Innern eines im Flansch eingelassenen Kugellagers zentriert ist. Die Zusatzluft oder das Gas, das von der Vorrichtung geliefert wird, passiert diesen Flansch und die Abstände zwischen den Kugeln des Lagers zur Korrektur der Vergasung, dadurch gekennzeichnet, daß der Trubulenzflansch mit dem peripheren Lager, zwischen dem Vergaser und dem Einlaß-krümmer des Motors angebracht ist, und daß das sich drehende Teil eine Axialturbine ist, von der sich nur die Schaufeln im Strom der vergasten Kraftstoffmischung befinden. Die Turbine und das bewegliche Teil des Kugellagers (3), vorzugsweise ein Anschlaglager, haben eine hinreichende Trägheit, damit die Turbine die Schwankungen des Flusses der Luft/Benzin-Mischung dämpfen kann, um die Erscheinungen des Doppeltansaugens von Benzin im Nibeau des Vergasers zu begrenzen und die Verteilung der vergasten Mischung auf die Einlassleitungen des Motors zu verbessern. Die Turbine (Fig. 16 und 17) besteht aus mehreren Flügeln, die um die Innenbohrung des Kugellagers herum verteilt sind, das eine Düse bildet. Die Schaufeln überschreiten die Stärke des Kugellagers und den Flansch und dringen in den Einlasskrümmer des Motors ein. Sie rücken zum Zentrum des Kugellagers hin zusammen, ohne es zu erreichen, und ihr Einfallswinkel in Bezug zum Geschwindigkeitsvektor der vergasten Mischung ist gering (20° etwa an der Schaufelwurzel). (Fig. 16).

12 - Vorrichtung nach einem der beliebigen Patentansprüche 1 bis 10, dadurch gekennzeichnet, daß sie ein elektrisches System enthält, das zur Steuerung einer Signallampe, oder eines beliebigen elektrischen Anzeigers verwendet wird, der am Armaturenbrett des Fahrzeuges in der Weise angebracht ist, daß von einem bestimmten Grenzwert der Beschleunigung oder Verzögerung an das elektrische System der Beleuchtung oder des Anzeigers geschaltet wird, um eine Anzeige der einwandfreien Funktion der Vorrichtung und eine Hilfe zur wirtschaftlichen Betriebsweise des Fahrzeuges zu liefern.

**Claims**

1 - A device for correcting the carburetion of engines submitted to frequent modifications of their speed of rotation and load, in particular car engines, where the system for controlling the corrections to be made includes (Fig. 1), a first sealed chamber (2) connected directly to the intake pressure revailing in the engine intake manifold (6), and a second sealed chamber (3) connected to the first chamber by a retardation throttle (5) for pressure transmission, so that the intake pressure variations of the engine transmitted immediately to the first chamber pass through to the second chamber only after a certain delay. A diaphragm (1) separates the first chamber from the second and is thus exposed to a differential pressure whose resulting force controls carburetion corrections characterized in that said device reduces the enrichment of the carburetted mixture during all the transitional phases of engine operation (accelerations and decelerations) by reducing or cutting out the flow of fuel supplied by the carburetion system and/or by the admission into the engine intake manifold, of additional air or crank-case gas, exhaust gas or a mixture of the various gases, and by the fact that the movements of the diaphragm control directly, in one direction and with reference to the neutral position, the component or components (8) which ensure corrections during engine deceleration and, in the other direction, the component or components (9) ensuring corrections during acceleration, and also characterized by the fact that the movements of the diaphragm control the carburetion correction components directly and mechanically, and/or through an electrical, electro-magnetic or electronic detector/transmitter (Fig. 5 and Fig. 15, items 1, 2 and 3).

2 - The device in accordance with claim 1 is characterized by the fact that it is designed to operate by intake, downstream of the carburettor, of additional gas or exhaust gas, crank-case gas or a mixture of both gases, characterized by the fact that the diaphragm controls (Fig. 9 - 12 - 13) simultaneously through a rod (11) in one direction, the opening of the distribution valve (9) for additional air or gas during deceleration and, in the other direction, the opening of a second distribution valve for air or gas intake during accelerations.

3 - A device according to claim 1, characterized by the fact that the diaphragm controls a distribution slide valve (Fig. 3) connecting the intake manifold to an additional air or exhaust gas or crank-case gas inlet during accelerations and decelerations.

4 - A device according to claim 1, characterized by the fact that it operates under the effect of accelerations and decelerations by the intake of air into the carburettor idling emulsion line and by the fact that it cuts off the flow to the idling jet of the carburettor during decelerations (Fig. 3).

5 - A device in accordance with claim 1, designed to reduce the petrol flow supplied by a carburettor through the intake of the engine intake pressure into the float chamber of the carburettor, characterized by the fact that the admission of this pressure into the float chamber is controlled by the load or the signal transmitted by the control diaphragm of the device to a gradual distribution system of the needle, valve or slide valve type, so as to bring about gradual introduction of the admission pressure into the float chamber in proportion to the engine accelerations or decelerations, also characterized by the fact that the float chamber of the carburettor is only connected to atmospheric pressure by a perfectly calibrated air jet (Fig. 2).

6 - A device in accordance with claim 1, ensuring at the least suppression of the flow from the idling jet of a carburettor during decelerations by closing of this jet of the well-known "electrical choke jet" type, or bythe closing of the emulsion line of the carburettor idling system, using a solenoid valve - choke arrangement, also well-known and characterized in that the control system of the device (Fig. 15) operates an electric contactor (1) which remains in the closed position during steady engine speeds and accelerations, so as to allow electric power supply to the choke (4) and normal flow from the idling jet, and which opens to cut off this electric supply and the flow from the jet, during accelerations.

7 - A device according to claim 6, characterized by the fact that the electrical supply to the choke, allowing normal flow from the idling jet is ensured, in the back-up mode, by a contactor independent of the device (Fig. 15, item 5) to avoid the possible stalling of the engine due to substantial deceleration followed by extended braking of the vehicle with said contact slaved to the speed of rotation of the engine or to the braking of the vehicle, by the brake system electric signaling contact (4).

8 - A device in accordance with claim 2, characterized by the fact that the distribution system for additional air or gas to the engine includes (Fig.9, 12 and 13), a single body (6) with two valves (8 and 9) or a distribution slide valve, arranged on one side of the control diaphragm, whose movement is imparted to the valves or to the distribution slide valve, by a hollow control rod (11) containing said retardation throttle (4 and 5) between the first and second chamber (2 and 3) of the control system.

9 - A device in accordance with claim 8, characterized in that the acceleration valve (Fig. 9, 12 and 13, item 8) has its seat on the base of valve chamber (6) and deceleration valve (9) integral with the control rod, has its seat centered on the acceleration valve (8) so that the movement of the rod (11) brings about, in the deceleration direction, the opening of deceleration valve(9) and in the acceleration direction, through valve (9) resting on its seat, the opening of acceleration valve (8).

10 - A device in accordance with any of claims 1 to 9, characterized by the fact that the retardation throttle has two ways (Fig. 6) while the first way (5) includes a capillary jet or porous porcelain spark plug, which allows identical circulation of the pressure in both directions while the second way(11), similarly constituted, has in addition a small non-return valve (12) with slight inertia.

11 - A device according to any of claims 1, 3 and 6 to 10, using a turbulence and homogenization turbine flange at the center of which is a rotary element centered within a ball bearing flush-fitted in the flange; the additional air or gas supplied by the device passing through the flange and the spaces between the balls of the ball bearing, to correct carburetion, characterized by the fact that the peripheral bearing turbulence flange is placed between the carburettor and the engine intake manifold and that the rotary element is an axial turbine of which only the blades are in the carburetted mixture flow and by virtue of the fact that the turbine and the mobile part of the ball bearing(3), preferably of the thrust bearing type, have sufficient inertia for the turbine to dampen the fluctuations in the flow rate of the air-petrol gas mixture in order to limit the phenomenon of double suction of petrol into the carburettor and to improve the distribution of the carburetted mixture in the intake manifolds of the engine with such turbine (Fig. 16 and 17) consisting of several blades distributed and located about the inner bore of the ball bearing forming a jet; the blades protrude beyond the thickness of the ball bearing and the flange, entering the engine intake manifold and converge towards the center of the ball bearing without reaching it, and a setting angle with respect to the speed vector of the carburetted mixture is low (20° approximately at the vane root) (Fig. 16).

12 - A device according to any of claims 1 to 10, characterized by the fact that it incorporates an electrical system designed for turning on an indicator lamp or electrical indicator of any type whatsoever, placed on the instrument panel of the vehicle in such a way that when the device enters into operation from a set acceleration or deceleration value, the electrical system turns on the indicator lamp or indicator, to indicate that the device is operating properly and to assist in economical driving of the vehicle.

Fig.1

Fig.2.

Fig. 3

Fig.4

Fig. 5

Détecteur

Transmetteur

Computer de carburation

Fig. 6

Fig. 7

9

3

3

2

10

7

1

12

4

11

5

8

Air

Filtre

Fig. 8

pa. (Pression d'admission)

pa. maxi.: 76 cm/Hg

(1) et (2)

(3)

0

5"

10"

15"

20"

25"

Temps

3

FiG.9

19 Air 12 13
8
9
1
4
5
14
3
2
6
7
11
15
+
10
17
FiG.10
Collecteur d'admission

FiG.11

0 026 198

5

Fig. 13

Fig. 12

Chambre 3

Fig. 14

Fig 15

Fig.16

3

2

1

Fig.17

Air

Fig.18

1

7

6

4

2

5

3

Fig.19

4

5

7

1

8

6

2

3

11